Europäisches Patentamt

European Patent Office

Office européen des brevets

(19)

(11) Numéro de publication: **0 265 300**
**A1**

(12) **DEMANDE DE BREVET EUROPEEN**

(21) Numéro de dépôt: 87402030.8

(22) Date de dépôt: 11.09.87

(51) Int. Cl.⁴: **B 01 D 3/06**
B 01 D 1/30, C 02 F 1/04

(30) Priorité: 15.09.86 FR 8612851

(43) Date de publication de la demande:
27.04.88 Bulletin 88/17

(84) Etats contractants désignés:
BE CH DE ES FR GB GR IT LI SE

(71) Demandeur: **COMMISSARIAT A L'ENERGIE ATOMIQUE**
**Etablissement de Caractère Scientifique Technique et**
**Industriel**
**31/33, rue de la Fédération**
**F-75015 Paris (FR)**

(72) Inventeur: **Deronzier, Jean-Claude**
**16 rue Jean-Jaurès**
**F-38610 Gières (FR)**

**Pitruzella, Stéphane**
**24 rue du Fournet**
**F-38120 Saint-Egrève (FR)**

(74) Mandataire: **Mongrédien, André et al**
**c/o BREVATOME 25, rue de Ponthieu**
**F-75008 Paris (FR)**

(54) **Appareil à distiller par évaporation sous vide.**

(57) Appareil à distiller par évaporation sous vide.

Il comprend une enceinte, un circuit (4, 6) d'adduction pour amener un fluide à distiller à ladite enceinte (2), ce circuit comprenant un condenseur-réchauffeur (10) situé dans l'enceinte (2), des moyens (12) pour échauffer le fluide à distiller jusqu'à une température d'entrée (T₂) et un détendeur (14) pour détendre le fluide sortant desdits moyens de chauffage (12) et pour produire une quantité de vapeur de ce fluide, l'appareil comportant en outre un moyen (30) pour maintenir l'enceinte à une pression inférieure à la pression de vapeur saturante du fluide à sa température d'entrée (T₂), un moyen pour évacuer un condensat (20) provenant de la condensation d'une partie de la vapeur du fluide à distiller et un moyen (28) pour évacuer un distillat provenant de la condensation de l'autre partie de la vapeur du fluide à distiller.

FIG. 1    FIG. 2    FIG. 3

EP 0 265 300 A1

**Description**

APPAREIL A DISTILLER PAR EVAPORATION SOUS VIDE DESCRIPTION

L'invention se rapporte au domaine de la production d'eau distillée à partir d'eau industrielle ou d'eau potable.

Les besoins en eau distillée produite à partir d'appareils de petite capacité (1 litre par heure à 100 litres par heure) sont très importants dans tous les secteurs de l'industrie et de la recherche, en particulier ceux de la microélectronique, du domaine biomédical, de l'agro-alimentaire, du nucléaire, etc., et ceci, que ce soit dans les pays industrialisés ou les pays en voie de développement.

On connaît actuellement trois techniques de purification de l'eau, à savoir par désionisation, par osmose inverse et par distillation atmosphérique.

La technique de distillation atmosphérique est la plus simple et la plus couramment utilisée. Elle consiste à chauffer l'eau à distiller dans un ballon à la pression atmosphérique jusqu'à une température de 100°C. La vapeur produite est condensée dans un condenseur refroidi par de l'eau froide. Toutefois, cette technique présente plusieurs inconvénients :

La température d'ébullition du fluide est élevée, environ 100°C, et provoque dans tous les cas des dépôts de tartre qui s'incrustent sur la surface de l'appareil de chauffe, généralement constitué par une résistance électrique.

Par ailleurs, la température du distillat, de l'ordre de 60 à 70°C, est trop élevée pour que celui-ci puisse être utilisé directement, sans être refroidi au préalable.

Pour remédier à ces inconvénients, il est nécessaire de prévoir un système inhibiteur d'entartrage utilisant par exemple des résines échangeuses d'ions pour éviter les dépôts de tartre ; et d'autre part, pour abaisser la température du distillat, il est nécessaire de prévoir un échangeur refroidisseur ou un réservoir de stockage de l'eau distillée de grande capacité. Il en résulte un coût d'investissement environ deux fois plus élevé ainsi que des frais d'entretien pour le nettoyage et le remplacement des résines échangeuses d'ions. De plus, il est nécessaire d'utiliser des matériaux nobles comme l'acier inoxydable, le verre borosilicaté ou le quartz.

On connaît par ailleurs (US-A-3 558 436) un appareil à distiller permettant de distiller de l'eau de mer une température voisine de la température ambiante. Cet appareil comporte une enceinte munie d'ailettes formant un évaporateur et une seconde enceinte formant condenseur, reliée à l'évaporateur par une conduite. L'eau à distiller est amenée dans l'évaporateur où elle est stockée sous forme liquide. Le condenseur contient un échangeur de chaleur hélicoïdal. Une pompe assure la mise sous vide du condenseur ainsi que l'extraction du distillat.

Toutefois, dans cet appareil, l'eau à distiller est introduite sans pression notable, puis stockée sous forme liquide dans l'évaporateur. Elle s'évapore à partir du niveau libre de ce liquide. Il en résulte une mauvaise séparation de l'eau et de la vapeur, de telle sorte que l'on est obligé de prévoir un séparateur à ailettes formant un passage sinueux. Les gouttelettes d'eau sont retenues par les plaques de séparateur et retournent vers l'évaporateur.

En outre, du fait que l'eau est stockée dans l'évaporateur, le volume de l'appareil est augmenté.

Enfin, cet appareil comporte deux enceintes séparées, à savoir l'évaporateur et le condenseur, reliées entre elles par une canalisation. Il en résulte une augmentation supplémentaire de l'encombrement de l'appareil.

On connaît également (WO-A-8 000 833) un appareil de distillation sous vide de l'eau de mer utilisant l'énergie solaire. Cet appareil comprend un évaporateur, un condenseur, une pompe à vid et en outre des moyens de chauffage du fluide à distiller avant son entrée dans l'évaporateur, ces moyens étant constitués par un capteur solaire.

Cependant, comme pour l'appareil décrit dans le document cité précédemment, le fluide à distiller est contenu sous forme liquide dans l'évaporateur avant la transformation de la phase liquide en phase vapeur. Il en résulte donc une mauvaise séparation de l'eau et de la vapeur. De plus, l'évaporateur et le condenseur ne sont pas disposés dans une même enceinte. Il en résulte une augmentation de l'encombrement.

La présente invention a pour objet un appareil distiller par évaporation sous vide qui permet de remédier à ces inconvénients de l'art antérieur.

En particulier, cet appareil a pour but d'améliorer la séparation de l'eau et de la vapeur tout en présentant un encombrement réduit.

L'appareil à distiller comprend une enceinte, un condenseur-réchauffeur situé dans ladite enceinte, un circuit d'adduction pour amener un fluide à distiller dans l'enceinte, un moyen pour maintenir l'enceinte à une pression inférieure à la pression atmosphérique, un moyen pour évacuer un condensat provenant de la condensation d'une partie de la vapeur du fluide à distiller et un moyen pour évacuer un distillat provenant de la condensation de l'autre partie de la vapeur du fluide distiller, caractérisé en ce qu'il comporte des moyens de chauffage pour échauffer le fluide à distiller à une température $T_2$, en ce que la dépression inférieure à la pression atmosphérique dans l'enceinte est maintenue inférieure à la pression de vapeur saturante du fluide à sa température d'entrée ($T_2$), et en ce qu'il comporte un détendeur-pulvérisateur pour détendre le fluide et produire une quantité de vapeur de ce fluide.

Dans le dispositif de l'invention, contrairement à l'art antérieur, l'eau est surchauffée et mise en pression par une pompe ou encore par la pression du réseau de distribution préalablement à son entrée dans l'enceinte. De ce fait, le fluide se détend dès son entrée dans l'enceinte et il apparaît une phase vapeur.

Grâce à ces caractéristiques, la température d'évaporation de l'eau est faible, de l'ordre de 35 à 40°C, et la température maximale de l'eau surchauffée n'excède par 60°C. On évite ainsi l'apparition du tartre.

De plus, aucun prétraitement chimique de l'eau n'est nécessaire et la température du distillat produit est beaucoup plus basse que celle d'un distillat obtenu par un procédé de l'art antérieur. En conséquence, il n'est pas nécessaire de prévoir un échangeur refroidisseur ni un réservoir de stockage de l'eau distillée de grande capacité.

La vapeur produite est généralement trèés pure, le distillat ayant une conductivité pouvant être inférieure à 1 μS.cm⁻¹. Il n'est pas nécessaire d'utiliser des matériaux nobles et coûteux pour réaliser un appareil à distiller conforme à l'invention. Ce dernier peut en effet être réalisé en des matériaux bon marché tels que la matière plastique (PEHD, PP, PVC). Ces matériaux sont peu chers, légers, inertes à la corrosion chimique et à l'encrassement particulier.

Cet avantage rend l'invention utilisable pour l'équipement de bateaux de navigation de plaisance. En outre, alors que selon l'art antérieur, le débit de vapeur est proportionnel à la surface du liquide à évaporer, selon l'invention, ce n'est pas le cas. Les dimensions de l'appareil sont donc réduites d'autant plus que le fluide à distiller n'y est pas stocké.

La séparation liquide/vapeur se fait au niveau du détendeur et se trouve améliorée. Cette amélioration est accentuée par le sens de circulation, à savoir du haut vers le bas, de l'ensemble vapeur/résidu liquide, ces derniers étant recueillis à la base de l'évaporateur.

D'autres caractéristiques et avantages de l'invention apparaîtront encore à la lecture de la description qui suit d'un exemple de réalisation donné à titre illustratif en référence aux figures annexées :

- la figure 1 est une vue schématique en coupe d'un premier mode de réalisation d'un appareil à distiller conforme à l'invention,

- la figure 2 est une vue schématique en coupe d'une variante de réalisation de l'appareil représenté sur la figure 1,

- la figure 3 est un schéma qui illustre le fonctionnement du détendeur-pulvérisateur.

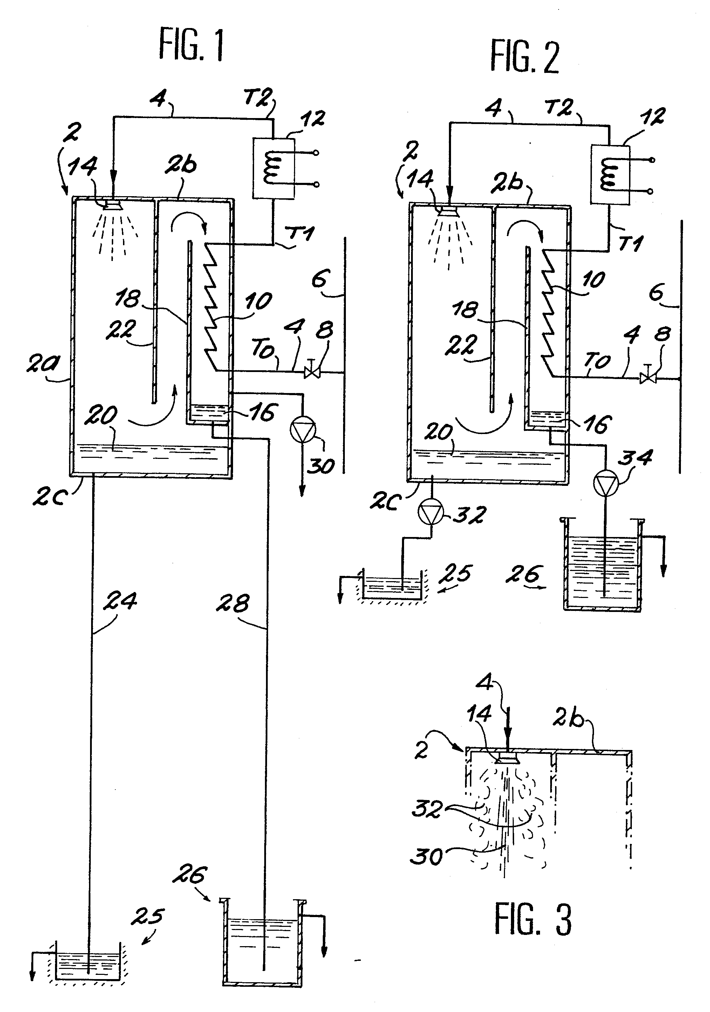

L'appareil à distiller représenté sur la figure 1 comprend une enceinte 2 constituée d'une paroi périphérique 2a, d'un fond supérieur 2b et d'un fond inférieur 2c. L'enceinte 2 peut présenter une forme quelconque , par exemple cylindrique ou parallélépipédique. Dans l'exemple de réalisation représenté, elle a été disposée verticalement, mais il va de soi que l'appareil à distiller fonctionnerait de manière identique si l'enceinte était disposée horizontalement.

L' appareil comprend par ailleurs une canalisation d'adduction d'eau 4 raccordée à un échangeur de chaleur 10 qui est situé à l'intérieur de l'enceinte 2. Dans cet échangeur, l'eau du réseau échange de la chaleur sensible avec la vapeur du fluide à distiller, comme on l'expliquera ultérieurement. L'eau pénètre dans l'échangeur à la température du réseau d'eau industrielle, soit $T_0$, et en ressort à une température $T_1$ supérieure à $T_0$ . La température $T_1$ n'est toutefois pas suffisamment élevée et il est nécessaire d'élever encore cette température jusqu'à une valeur $T_2$ . Ceci est obtenu par un moyen de chauffe auxiliaire constitué par exemple par une résistance électrique 12. A la sortie du réchauffeur 12, l'eau est introduite dans un détendeur 14 fixé à la paroi supérieure 2b de l'enceinte. Etant donné que l'on maintient en permanence dans cette enceinte une pression inférieure à la pression de vapeur saturante de l'eau à la sortie du réchauffeur 12, l'eau se détent brutalement en formant de la vapeur. Cette vapeur vient se condenser au contact de la paroi froide de l'échangeur 10 qui constitue ainsi un condenseur. Le condensat 16 est recueilli au fond d'un bac de réception 18 qui entoure l'échangeur 10. D'autre part, une fraction de l'eau à distiller qui ne s'est pas vaporisée dans le détendeur 14 mais qui est restée sous forme liquide est reçue dans le fond 2c de l'enceinte. Les gouttelettes d'eau qui se forment sur le déflecteur de gouttelettes 22 constitué par une paroi verticale qui divise l'enceinte 2 en deux volumes sensiblement égaux, sont également recueillies au fond de l'enceinte. L'eau 20 est renvoyée à l'égout par l'intermédiaire d'une colonne barométrique 24. La hauteur de cette colonne, environ 6 mètres, est calculée de manière à ajuster la pression à l'intérieur de l'enceinte à une valeur convenable, c'est-à-dire, dans l'exemple de réalisation décrit, environ 0,4 atm., soit 400 millibars. Le condensat 16 est évacué vers un récipient de stockage 26 au moyen d'une colonne 28 dont la hauteur est la même que celle de la colonne 24. L'enceinte est mise sous vide au moyen d'une pompe d'extraction 30.

Dans l'exemple de réalisation qui vient d'être décrit, le réchauffeur 12 a été placé à l'extérieur de l'enceinte 2. Toutefois, selon une variante, ce réchauffeur pourrait être placé à l'intérieur de l'enceinte, ce qui donnerait à l'appareil à distiller un encombrement très réduit.

On a représenté sur la figure 2 un deuxième mode de réalisation d'un appareil à distiller conforme à l'invention. Il s'en distingue par le fait que la colonne barométrique 24 (figure 1) a été remplacée par une pompe d'extraction 32 qui permet d'évacuer à l'égout l'eau détendue 26. La pompe 34 assure simultanément l'évacuation du condensat vers le réservoir de stockage 26 et l'extraction des gaz incondensables. L'avantage de ce deuxième mode de réalisation réside dans le fait que l'on évite d'utiliser des colonnes barométriques de hauteur très importante. L'encombrement de l'appareil est ainsi diminué et ce dernier peut être placé à proximité du réservoir de stockage 26 et, par suite, de l'utilisateur.

EXEMPLE NUMERIQUE

On a réalisé un appareil à distiller par évaporation sous vide dont les caractéristiques étaient les suivantes :

L'appareil était alimenté en eau à partir d'un réseau d'eau industrielle dont la pression était comprise entre 2 et 8 bars et la température était de 15°C. Le débit d'entrée de l'eau était d'environ 100 litres par heure. La température de l'eau à l'entrée de l'échangeur économiseur était égale à celle du réseau, soit 15°C. A la sortie de cet échangeur, l'eau atteignait 38°C. Le réchauffeur 12 utilisé avait une puissance électrique de 2,5 kW. En sortie de réchauffeur, la température de l'eau $T_2$ atteignait 60°C. La pression dans l'enceinte 2 était maintenue à 60 torrs, ce qui correspond à une température de vapeur saturante de 38°C pour l'eau. La hauteur des colonnes barométriques était de 6 mètres. Dans ces conditions, le débit d'eau distillée produite atteignait 4 litres par heure.

Les valeurs des consommations d'eau et d'énergie électrique mentionnées ci-dessus sont proches de celles qui sont nécessaires avec la technique de distillation atmosphérique classique.

La figure 3 est un schéma qui illustre le fonctionnement du pulvérisateur détendeur des appareils représentés sur les figures 1 et 2. Le jet est constitué d'une partie centrale conique 30 confinée, constituée de gouttes d'eau liquides. La vapeur 32 s'échappe à la périphérie du cône central 30. Ceci est avantageux puisque la vapeur est délivrée des gouttes liquides qui tombent dans le fond de l'évaporateur. Ainsi, la qualité du distillat est notablement améliorée. Il n'est plus nécessaire d'utiliser des moyens de séparation de gouttelettes qui sont compliqués et volumineux.

Les rendements de vaporisation (ou de détente) ont été mesurés pour différentes valeurs de surchauffe du liquide. A basse température, ils sont voisins de 100%, ce qui n'est jamais obtenu à l'aide d'autres systèmes tels que des diaphragmes circulaires ou des rampes percées.

## Revendications

1. Appareil à distiller comprenant une enceinte (2), un condenseur-réchauffeur (10) situé dans ladite enceinte (2), un circuit (4) d'adduction pour amener un fluide à distiller dans l'enceinte (2), un moyen (30) pour maintenir l'enceinte à une pression inférieure à la pression atmosphérique, un moyen pour évacuer un condensat provenant de la condensation d'une partie de la vapeur du fluide à distiller et un moyen (28) pour évacuer un distillat provenant de la condensation de l'autre partie de la vapeur du fluide à distiller, caractérisé en ce qu'il comporte des moyens de chauffage (12) pour échauffer le fluide à distiller à une température ($T_2$), en ce que la dépression inférieure à la pression atmosphérique dans l'enceinte est maintenue inférieure à la pression de vapeur saturante du fluide à sa température d'entrée ($T_2$), et en ce qu'il comporte un détendeur-pulvérisateur (14) pour détendre le fluide et produire une quantité de vapeur de ce fluide.

2. Appareil selon la revendication 1, caractérisé en ce que le moyen pour évacuer le condensat (20) est constitué par une colonne barométrique (24).

3. Appareil selon l'une des revendications 1 ou 2, caractérisé en ce que le moyen pour évacuer le distillat (16) est constitué par une colonne barométrique (28).

4. Appareil selon l'une quelconque des revendications 1 à 3, caractérisé en ce que le moyen pour maintenir l'enceinte à une pression inférieure à la pression de vapeur saturante de la vapeur du gaz est constitué par une pompe d'extraction (30).

5. Appareil selon la revendication 1, caractérisé en ce que le moyen pour évacuer le condensat est constitué par une pompe d'extraction (32).

6. Appareil selon l'une des revendications 1 ou 5, caractérisé en ce que les moyens pour évacuer le condensat et pour maintenir l'enceinte à une pression inférieure à la pression de vapeur saturante du fluide à distiller sont constitués par une pompe d'extraction (34).

7. Appareil selon l'une quelconque des revendications 1 à 6, caractérisé en ce qu'il comporte un déflecteur vertical de gouttelettes (22) et un bac (18) de récupération du distillat, le condenseur - réchauffeur (10) étant placé dans ce bac de récupération.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | US-A-3 558 436  (N.L. FOLEY et al.)<br>* Colonne 2, ligne 38 - colonne 3, ligne 19; colonne 4, lignes 37-53; figures 1,2 *<br>--- | 1-4,6 | B 01 D   3/06<br>B 01 D   1/30<br>C 02 F   1/04 |
| D,X | WO-A-8 000 833  (PROJECTUS INDUSTRIPRODUKTER AB)<br>* Page 5, ligne 21 - page 8, ligne 20; figures; abrégé *<br>--- | 1,2,4,5 | |
| A | US-A-2 893 926  (E.P. WORTHEN et al.)<br>* Colonne 2; lignes 13-39; figure *<br>--- | 1 | |
| A | US-A-3 345 271  (S.H. SHAY et al.)<br>* Colonne 1, ligne 64 - colonne 2, ligne 20; figure 1 *<br>--- | 1 | |
| A | US-A-3 418 214  (D. CANE)<br>* Colonne 3, ligne 46 - colonne 4, ligne 8; colonne 5, lignes 26-35; figure 1 *<br>----- | | |

DOMAINES TECHNIQUES
RECHERCHES (Int. Cl.4)

B 01 D
C 02 F

Le présent rapport a été établi pour toutes les revendications

| Lieu de la recherche | Date d'achèvement de la recherche | Examinateur |
|---|---|---|
| LA HAYE | 15-12-1987 | VAN BELLEGHEM W.R. |

EPO FORM 1503 03.82 (P0402)